Europäisches Patentamt

European Patent Office

Office européen des brevets

(19)

(11) **EP 1 583 320 A2**

(12) **EUROPEAN PATENT APPLICATION**

(43) Date of publication:
05.10.2005 Bulletin 2005/40

(51) Int Cl.$^7$: **H04L 29/06**

(21) Application number: 05102513.8

(22) Date of filing: 30.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **01.04.2004 US 816319**

(71) Applicant: **MICROSOFT CORPORATION**
**Redmond, Washington 98052-6399 (US)**

(72) Inventors:
• **Jump, Daniel B.**
  **Redmond WA 98052 (US)**
• **Maddin, Matthew D.**
  **Redmond WA 98052 (US)**
• **Nizar, Shaheeda P.**
  **Redmond WA 98052 (US)**

(74) Representative: **Grünecker, Kinkeldey,**
**Stockmair & Schwanhäusser Anwaltssozietät**
**Maximilianstrasse 58**
**80538 München (DE)**

(54) **System and method for sharing objects between computers over a network**

(57)     A method and system to share objects that may reside on different machines. These objects can be accessed and shared using a computer network such as the Internet. The objects can comprise computer programming objects, that may include but are not limited to, application programming interfaces (APIs), programming object libraries, computer program object definitions, and other like information for computer network based applications. The method and system do not require a computer server since the invention may operate more like a peer-to-peer or multipoint computer network. The method and system can work with both peer-to-peer networks and client-server networks without requiring computers in a network to be identified as servers or as non-server (client) type computers.

FIG. 3

**Description**

TECHNICAL FIELD

The present invention relates to sharing information between computers over a network, and more specifically, it relates to a peer-to-peer or a multipoint network that allows sharing of computer objects between computers.

BACKGROUND OF THE INVENTION

Conventional computer object sharing environments typically use a client-server architecture in which client computers access a central server in order to run programs or retrieve data. A client-server architecture is a common form of a distributed computing system in which software is split between server tasks and client tasks. A client can send requests to a server, according to some protocol, asking for information or action, and the server can respond to this request.

The client-server model is analogous to a customer (client) who sends an order (request) on an order form to a supplier (server) who dispatches the goods and an invoice (response). The order form and invoice are part of the "protocol" used to communicate in this case.

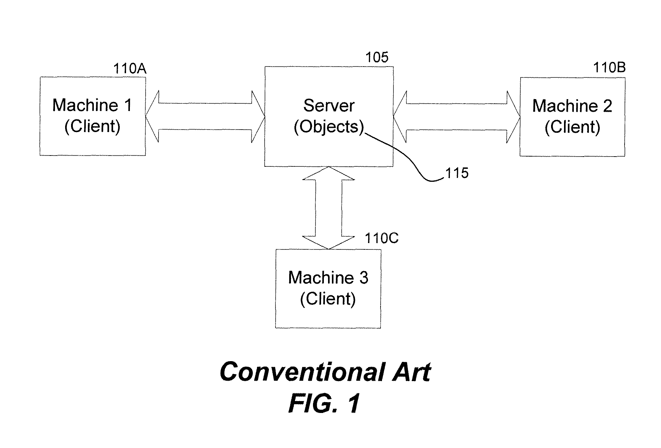

Referring now to Figure 1, this figure illustrates a conventional client-server architecture 100 in which a server 105 provides first, second, and third client computers 110A, 110B, and 110C with access to network-based objects 115 residing on the server 105. According to this exemplary client-server architecture 100, if the first computer 110A wanted to send a video file to the second computer 110B in this network, the first computer 110A would need to transfer the file to the server 105. The server 105, in turn, would transfer the video file to the second computer 110B. In this file transferring scenario, the server 105 slows down the transfer of information between the first and second computers 110A and 110B.

According to another exemplary scenario, when one of the computers 110 desires to change a network-based object 115 residing on the server 105, the computer 110 must wait for the server 110 to send a message back to the computer 110 to confirm that the change has been made. This waiting period can be referred to as latency. Latency can be troublesome when instantaneous changes to the network-based objects 115 are desired. For example, latency can be very disruptive for real-time collaboration applications such as for chat programs and presentation applications where "live" changes or distribution of information that may include audio and computer data are needed.

Another problem associated with the conventional client-server architecture 100 as well as with peer-to-peer programming applications is that when programs are written that use a network-based object, the type of computer architecture in which communications take place concerning this network-based object must be specified. In other words, one must identify if a network-based object will be shared within a client-server architecture 100 or within a peer-to-peer network (not illustrated in Figure 1). This means that conventional technology must identify what communication protocols will be used to access and manipulate the network-based object.

A further problem associated with the conventional art is that a network-based object can only be shared within one type of computer architecture and not across different types of network architectures because the type of communication protocol for a particular network must be identified and addressed when writing any computer code. This means that a program cannot be written with conventional computer programs where a network-based object is shared across both a peer-to-peer network and a client-server network. A conventional computer program must specify only one and not both types of computer architectures.

Accordingly, there is a need in the art for a method and system that can share network-based objects across different types of computer architectures such as both client-server architectures and peer-to-peer type architectures without specifying the communications protocol that will needed to communicate across the different architectures. A further need in the art exists for substantially reducing or eliminating latency often associated with sharing network-based objects between computers in order to improve real-time communications between the computers. Another need exists in the art where computer programs can be written using standard object-oriented techniques irrespective of the type of computer architecture that will host any network-based objects.

SUMMARY OF THE INVENTION

The present invention can comprise a method and system for sharing objects that may reside on different machines and are accessible over a computer network such as the Internet. The objects can comprise computer programming objects, that may include but are not limited to, application programming interfaces (APIs), programming object libraries, computer program object definitions, and other like information for computer network based applications. The system and method can allow computer programs to be written that make calls to network-based objects residing on different computers connected to a computer network.

One advantage of the present invention is that it does not require a computer server since the invention may operate more like a peer-to-peer computer network. Another advantage of the present invention is that it can treat peer computers in the same manner even if a peer computer is a computer server. In other words, the present invention can work with both peer-to-peer networks and client-server networks without requiring computers to be identified as servers or as non-server (client) type computers.

Applications for this invention can include real time collaboration (RTC) that can allow computers connected over a network to communicate and share information in real time and almost simultaneously compared to conventional client-server architectures. Exemplary RTC applications can include, but are not limited to, the following examples: exchanging information through chat programs that may reside on different computers, sharing documents within word processing programs that may reside on different computers, sharing spreadsheets within spreadsheet programs that may reside on different computers, sharing presentations between presentation applications that may reside on different computers, sharing data between gaming programs that may reside on different computers, and other like RTC applications where it is advantageous to share data in real time across several different computers.

To provide this sharing of information across computers in a network, networked-based objects or shared objects that support the RTC applications typically reside on each computer. However, in some situations, a first computer that may need to use a network-based object may not have a copy of the network-based object and the first computer may be given access to the network-based object that may reside on a second computer. This sharing of network-based objects can occur if the first computer has limited memory where the first computer could be a hand-held computer, such as a personal digital assistant (PDA).

When a computer program makes a call to the network-based object, security checks can be run in order to determine if the computer running the program is permitted to access the particular network-based object. For example, security checks can be run locally within the computer running the program to determine if it is permitted to access the network-based object that may also be stored locally on the computer. Similarly, security checks can also be run across the network for the other computers that have a copy of the network-based object in order to determine if the computer running the program is permitted to access the network-based object.

If the computer making a call to a network-based object has permissions to access the network-based object, then the computer can synchronize the network-based object residing in its memory with all of the same objects that may reside on different computers across the network. In this way, each computer that has access to and a copy of a particular network-based object may receive all of the latest updates that can be made to the network-based object, where the updates can be occurring in real time.

For computer programming applications using the networked-based objects, once an object class has been created where the class can include networked-based objects, standard object-oriented techniques can be used to work with all objects of the class, including any network-based objects. The inventive system and method can intercept those method calls made to networked-based objects and handle the method calls according to the network attributes of the network-based objects.

For example, a call to a network-based object that may reside on the computer making a call may not be executed or completed until a confirmation receipt has been received by all of the other computers who have a copy of the network-based object and are required to provide their confirmation receipt. If the call is to a network-based object that has a fully-ordered method where the steps of the method must occur in a specific sequence, then all of the other computers who have a copy of the network-based object may need to agree to the sequence before the call is executed or started locally on the computer making the call to the network-based object.

To manage and track the network-based objects, the inventive system can use contexts. Each network-based object of the system can have one associated context. And each network-based object can be part of one context. Each context can comprise information that tracks one or relationships between multiple system network objects and relationships between computers that may have copies of the objects and/or access to the objects.

Each context can identify which computers have one or more particular network-based objects and it can help manage the network-based objects that are part of a particular context. A context can help make sure that each computer that is part of a context has the same version of the one or more network-based objects that may make up the context. Each context can have a security sublisting to help determine which computers can access certain network-based objects in a context list and which computers can change objects in a context.

A context can have different states. A dormant state can mean that computers with network-based objects that are part of a particular context may not be using the network-based objects. An active state can mean that the computers with the network-based objects are using the network-based objects in some fashion and communications concerning the network-based objects are occurring between the computers present in the context.

The system and method can also use total ordered packets during various communications between computers in a context so that network object consistency and integrity are maintained.

BRIEF DESCRIPTION OF THE DRAWINGS

Figure 1 is a block diagram of a conventional client-server computer architecture.

Figure 2 is a block diagram of a network personal computer that provides the exemplary operating environment for the present invention.

Figure 3 is a functional block diagram illustrating an exemplary system for sharing network-based objects according to one exemplary embodiment of the present invention.

Figure 4A is a functional block diagram illustrating an exemplary high-level architecture of the system for sharing objects between computers over a network according to one exemplary embodiment of the present invention.

Figure 4B is a functional block diagram listing various stages over time that can exist during an object creation sequence according to one exemplary embodiment of the present invention.

Figure 5 is a functional block diagram illustrating exemplary components that can be found in a context according to one exemplary embodiment of the present invention.

Figure 6A a functional block diagram illustrating various different sessions that can exist between computers that have objects which are part of a context according to one exemplary embodiment of the present invention.

Figure 6B a functional block diagram illustrating details of a first session that is part of a first context of Figure 6A according to one exemplary embodiment of the present invention.

Figure 6C a functional block diagram illustrating details of a second session that is part of a second context of Figure 6A according to one exemplary embodiment of the present invention.

Figure 7 is a functional block diagram illustrating an exemplary architecture of a system network object according to one exemplary embodiment of the present invention.

Figure 8 is a logic flow diagram illustrating an overview of an exemplary process for sharing objects between computers over a network where a second computer joins a session with first computer according to one exemplary embodiment of the present invention.

Figure 9 is an exemplary functional block diagram illustrating a shared object and how this shared object can be accessed by different nodes in a computer network according to one exemplary embodiment of the present invention.

DETAILED DESCRIPTION OF THE EXEMPLARY EMBODIMENTS

The method and system can share objects that may reside on different computers. These objects can be accessed and shared using a computer network such as the Internet. The objects can comprise computer programming objects, that may include but are not limited to, application programming interfaces (APIs), programming object libraries, computer program object definitions, and other like information for computer network based applications. The method and system operates like a peer-to-peer or multipoint computer network instead of a conventional client-server architecture.

The method and system can work with both peer-to-peer networks and client-server networks without requiring computers in a network to be identified as servers or as non-server (client) type computers. Applications for the method and system can include real time collaboration (RTC) applications that can allow computers connected over a network to communicate and share information in real time and almost simultaneously.

Exemplary Operating Environment

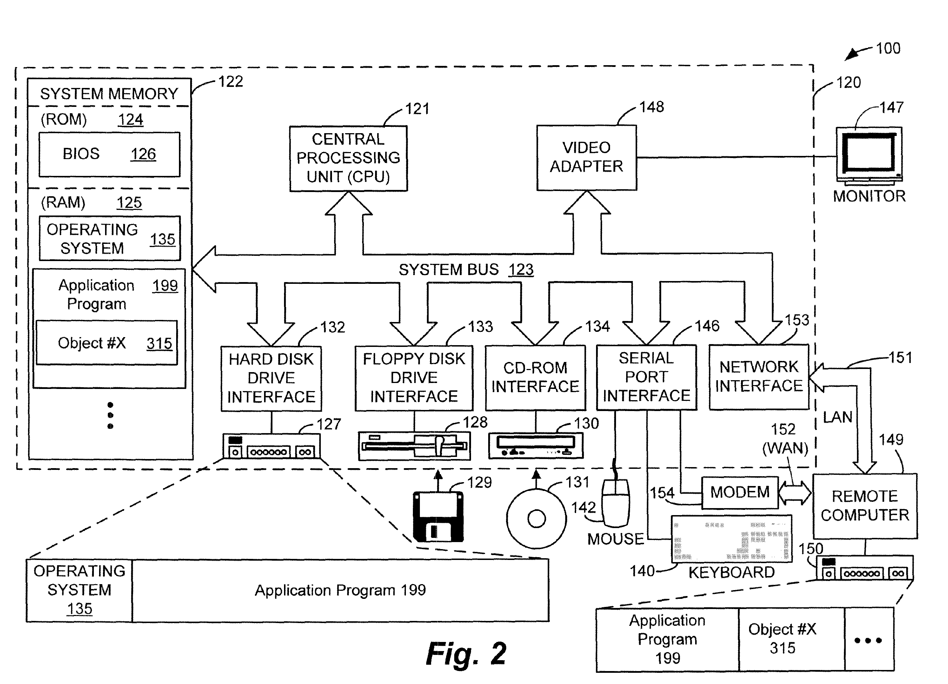

Exemplary embodiments of the present invention will hereinafter be described with reference to the drawings, in which like numerals represent like elements throughout the several figures. Fig. 2 illustrates an exemplary operating environment 200 for implementation of the present invention.

The exemplary operating environment 200 includes a general-purpose computing device in the form of a conventional personal computer 120. Generally, the personal computer 120 includes a processing unit 121, a system memory 122, and a system bus 123 that couples various system components including the system memory 122 to the processing unit 121. The system bus 123 may be any of several types of bus structures including a memory bus or memory controller, a peripheral bus, and a local bus using any of a variety of bus architectures. The system memory includes a read-only memory (ROM) 124 and a random access memory (RAM) 125. A basic input/output system (BIOS) 126, containing the basic routines that help to transfer information between elements within personal computer 120, such as during start-up, is stored in ROM 124.

Personal computer 120 further includes a hard disk drive 127 for reading from and writing to a hard disk, not shown, a magnetic disk drive 128 for reading from or writing to a removable magnetic disk 129, and an optical disk drive 130 for reading from or writing to a removable optical disk 131 such as a CD-ROM or other optical media. Hard disk drive 127, magnetic disk drive 128, and optical disk drive 130 are connected to system bus 123 by a hard disk drive interface 132, a magnetic disk drive interface 133, and an optical disk drive interface 134, respectively.

Although the exemplary environment described herein employs hard disk 127, removable magnetic disk 129, and removable optical disk 131, it should be appreciated by those skilled in the art that other types of computer readable media which can store data that is accessible by a computer, such as magnetic cassettes, flash memory cards, digital video disks, Bernoulli cartridges, RAMs, ROMs, and the like, may also be used in the exemplary operating environment. The drives and their associated computer readable media provide nonvolatile storage of computer-executable instructions, data structures, program modules, and other data for personal computer 120.

A number of program modules may be stored on hard disk 127, magnetic disk 129, optical disk 131, ROM 124, or RAM 125, including an operating system 135, application program 410 comprising an network-based object 315 comprising program modules. Program modules can include, but are not limited to, routines, subroutines, programs, objects, components, data structures, etc., which perform particular tasks or implement particular abstract data types.

A user may enter commands and information into personal computer 120 through input devices, such as a keyboard 140 and a pointing device 142. Pointing devices may include a mouse, a trackball, and an electronic pen that can be used in conjunction with an electronic tablet. Other input devices (not shown) may include a microphone, joystick, game pad, satellite dish, scanner, or the like. These and other input devices are often connected to processing unit 122 through a serial port interface 146 that is coupled to the system bus 123, but may be connected by other interfaces, such as a parallel port, game port, a universal serial bus (USB), or the like. A display device 147 may also be connected to system bus 123 via an interface, such as a video adapter 148. In addition to the monitor, personal computers typically include other peripheral output devices (not shown), such as speakers and printers.

The personal computer 120 may operate in a networked environment using logical connections to one or more remote computers 149. Remote computer 149 may be another personal computer, a server, a client, a router, a network PC, a peer device, or other common network node. While a remote computer 149 typically includes many or all of the elements described above relative to the personal computer 120, only a memory storage device 150 has been illustrated in the Figure. The logical connections depicted in the Figure include a local area network (LAN) 151 and a wide area network (WAN) 152. Such networking environments are commonplace in offices, enterprise-wide computer networks, intranets, and the Internet.

When used in a LAN networking environment, the personal computer 120 is often connected to the local area network 151 through a network interface or adapter 153. When used in a WAN networking environment, the personal computer 120 typically includes a modem 154 or other means for establishing communications over WAN 152, such as the Internet. Modem 154, which may be internal or external, is connected to system bus 123 via serial port interface 146. In a networked environment, program modules depicted relative to personal computer 120, or portions thereof, may be stored in the remote memory storage device 150. It will be appreciated that the network connections shown are exemplary and other means of establishing a communications link between the computers may be used.

Moreover, those skilled in the art will appreciate that the present invention may be implemented in other computer system configurations, including hand-held devices, multiprocessor systems, microprocessor based or programmable consumer electronics, network person computers, minicomputers, mainframe computers, and the like. The invention may also be practiced in distributed computing environments, where tasks are performed by remote processing devices that are linked through a communications network. In a distributed computing environment, program modules may be located in both local and remote memory storage devices.

Exemplary Overview of System

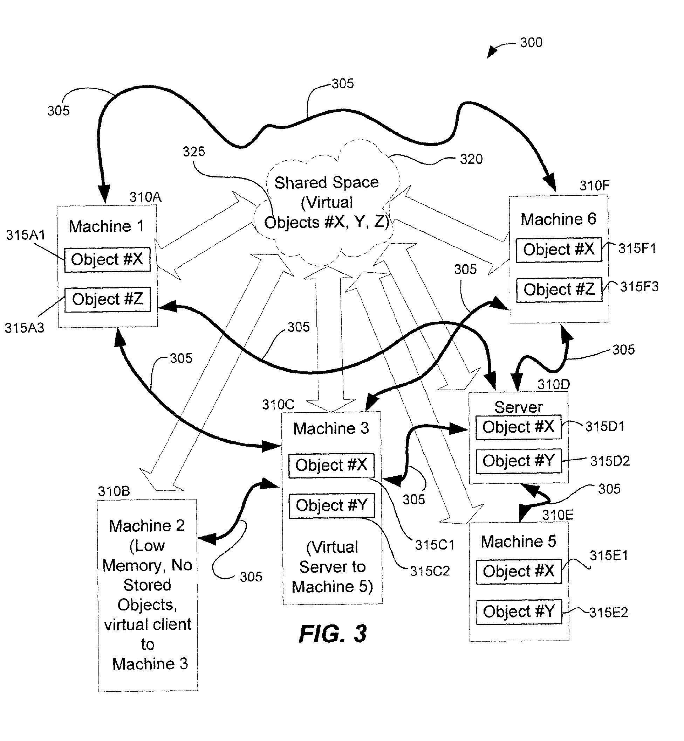

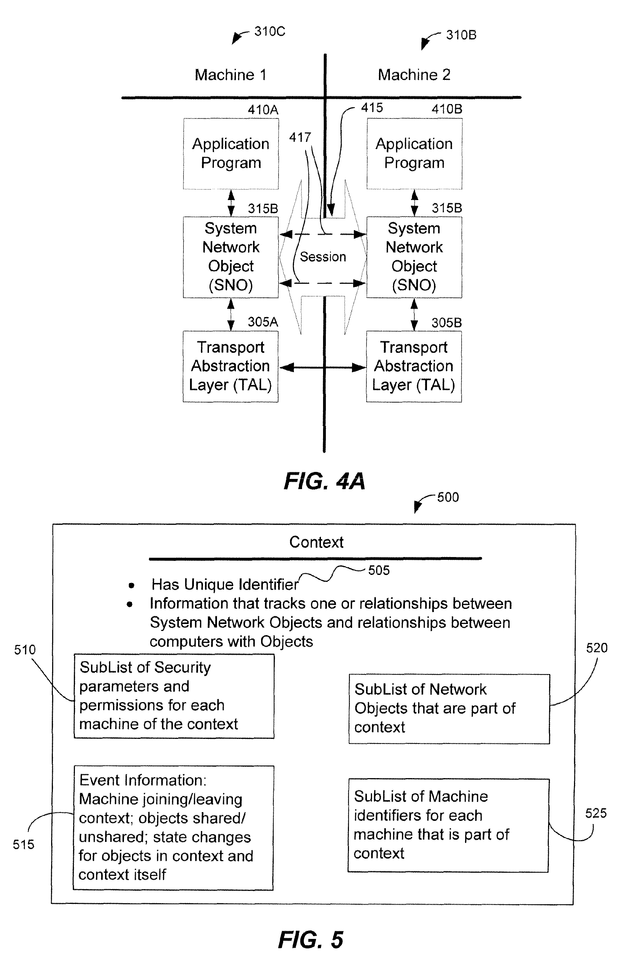

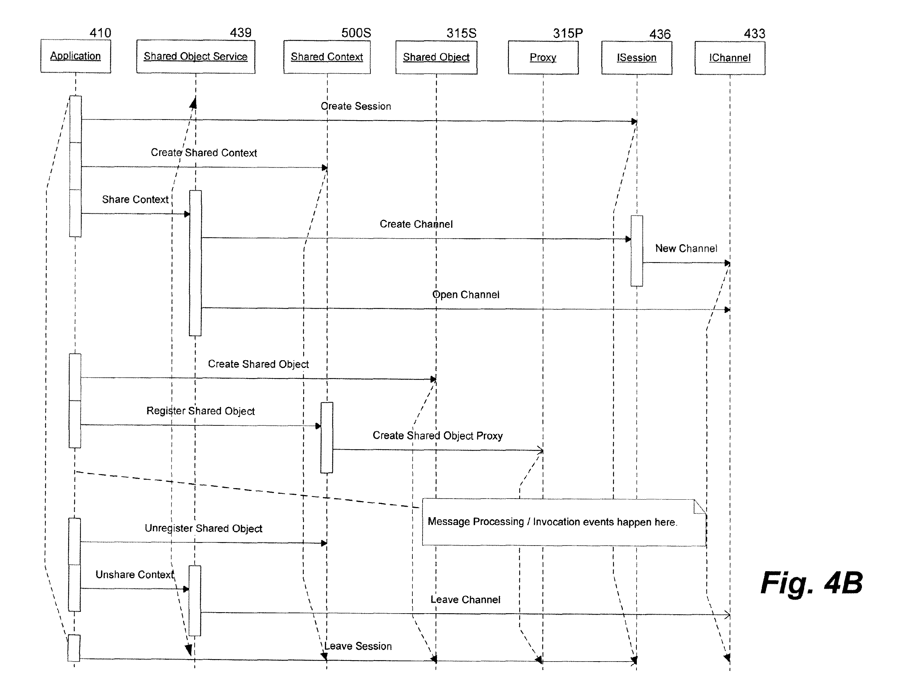

Referring now to Figure 3, this figure illustrates an exemplary system 300 for sharing objects 315 between computers 310 over a network. Each computer 310 can be coupled to another respective computer 310 through a link 305. Links 305 can comprise a connection made over the Internet or a direct connection such as a phone line. The links 305 can also be part of a transport abstraction layer (TAL) as will be discussed below with respect to Figure 4.

Each computer or machine 310 can store one or more objects 315 locally such as on a storage device like a hard drive or in memory within a respective computer 310. Each computer 310 can store the same objects such as first Object X 315 except for the fifth computer 310B. Also, each computer 310 can also store different objects 315 such as second and third Objects Y and Z. As illustrated in Figure 3, second and third Objects Y and Z do not reside on all of the computers 310.

The method and system 300 of the present invention allow each computer 310 to communicate with one another and in such a direct yet seamless fashion that the system can form a perceived shared space 320 in which the computers share virtual objects 325. In other words, from a programming perspective, lines of computer code that are written to access the objects 315 of the present invention can perceive the objects 315 to be virtual objects 325 that reside in the shared space 320 and not on other computers. Computer code using the objects 315 of the present invention does not need to identify whether the objects reside on peer network or on a server. Any computer code using the objects 315 of the present invention does not need to concern itself with the communication mechanism between the computers 310 that form the network 300.

As mentioned above, the present invention operates with any type of computer 310, whether the computer is a server, such as the server 310D, or a stand alone client or solo computer, like the first, second, third, and fifth computers 310A-C, and E-F. Further, the inventive system 300 allows for the communications of objects irrespective if the computer 310 can store an object 315. For example, the third computer 310C can function as a virtual server to the second computer 310B because the second computer 310B may comprise a low memory device such a personal digital assistant (PDA) that may not have the ability to store any of the objects 315 supported by the network 300.

Figure 3 illustrates how computers 310 can be interconnected with their links 305. For example, the third computer 310C may be coupled to the low memory second computer 310B via a link 305. The third computer 310C may be coupled to the server 310D and the fifth computer 310E and sixth computer 310F via additional links 305. The second, third, fifth computer (310B, 310C, and 310E), and server 310D can each have the same two objects such as Objects X and Y residing locally. Meanwhile, the third computer 310C may not have the same two objects X, Y 315C1 and 315C2 as the sixth computer 310F. That is, the third computer 310C may not have the third object Z residing on that computer while the sixth computer 310F may have the third object Z residing on that computer.

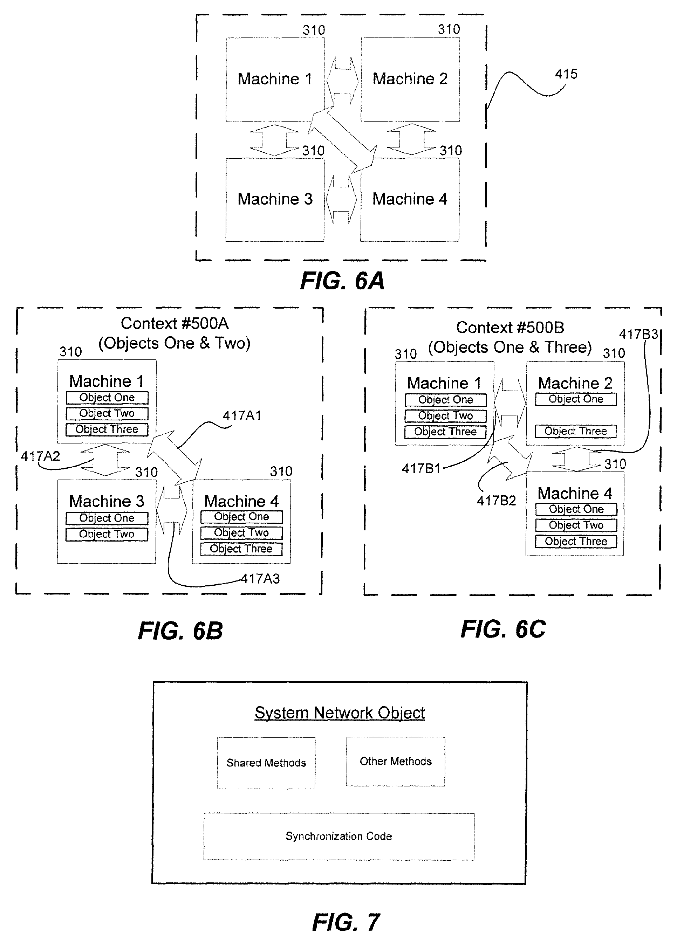

While each object 315 may not reside on every computer 310, computers 310 without a particular object 315 may access non-local objects 315 on other computers 310 if a particular computer 310 has permission to access the non-local object 315. The permission to access any object 315 (including non-local objects 315) can be maintained in a context 500 as will be discussed in further detail below with respect to Figure 5.

Exemplary High-level Architecture of System

Referring now to Figure 4, this figure illustrates an exemplary high-level architecture 400 of the system for sharing objects 315 between computers 310 over a computer network. Each computer 310 has a transport abstraction layer (TAL) that may form part of the link 305 discussed above with respect to Figure 3. Coupled to the transport abstraction layer 305 can be the system network objects (SNOs) 315 as described in Figure 3.

The system network objects (SNOs) 315 can support application programs 410 that can include, but are not limited to, real time collaboration (RTC) programs for: exchanging information through chat programs that may reside on different computers, sharing documents within word processing programs that may reside on different computers, sharing spreadsheets within spreadsheet programs that may reside on different computers, sharing presentations between presentation applications that may reside on different computers, sharing data between gaming programs that may reside on different computers, and other like RTC applications where it is advantageous to share data in real time across several different computers.

The transport abstraction layer 305 can comprise a set of interfaces that can allow one computer 310 to communicate with one or more other computers 310 in a network. The transport abstraction layer can use, but is not limited to, interfaces such as TCP, Peer net, HTTP, or any other like communications technology that allows a computer 310 to send messages to and receive messages from other computers 310 across a network. The transport abstraction layer 305 can form a virtual link or session 415 between the system network objects 315 residing on different computers 310. A session 415 will be described below.

Exemplary Process Flow and Method for Sharing objects 315 between computers in a network

The processes and operations described below with respect to all of the logic flow diagrams may include the manipulation of signals by a processor and the maintenance of these signals within data structures resident in one or more memory storage devices. For the purposes of this discussion, a process can be generally conceived to be a sequence of computer-executed steps leading to a desired result.

These steps usually require physical manipulations of physical quantities. Usually, though not necessarily, these quantities take the form of electrical, magnetic, or optical signals capable of being stored, transferred, combined, compared, or otherwise manipulated. It is convention for those skilled in the art to refer to representations of these signals as bits, bytes, words, information, elements, symbols, characters, numbers, points, data, entries, objects, images, files, or the like. It should be kept in mind, however, that these and similar terms are associated with appropriate physical quantities for computer operations, and that these terms are merely conventional labels applied to physical quantities that exist within and during operation of the computer.

It should also be understood that manipulations within the computer are often referred to in terms such as creating, adding, calculating, comparing, moving, receiving, determining, identifying, populating, loading, executing, etc. that are often associated with manual operations performed by a human operator. The operations described herein can be machine operations performed in conjunction with various input provided by a human operator or user that interacts with the computer.

In addition, it should be understood that the programs, processes, methods, etc. described herein are not related or limited to any particular computer or apparatus. Rather, various types of general purpose machines may be used with the following process in accordance with the teachings described herein.

The present invention may comprise a computer program or hardware or a combination thereof which embodies the functions described herein and illustrated in the appended flow charts. However, it should be apparent that there could be many different ways of implementing the invention in computer programming or hardware design, and the invention should not be construed as limited to any one set of computer program instructions.

Further, a skilled programmer would be able to write such a computer program or identify the appropriate hardware circuits to implement the disclosed invention without difficulty based on the flow charts and associated description in the application text, for example. Therefore, disclosure of a particular set of program code instructions or detailed hardware devices is not considered necessary for an adequate understanding of how to make and use the invention. The inventive functionality of the claimed computer implemented processes will be explained in more detail in the following description in conjunction with the remaining Figures illustrating other process flows.

Further, certain steps in the processes or process flow described in all of the logic flow diagrams below must naturally precede others for the present invention to function as described. However, the present invention is not limited to the order of the steps described if such order or sequence does not alter the functionality of the present invention. That is, it is recognized that some steps may be performed before, after, or in parallel other steps without departing from the scope and spirit of the present invention.

Transport Abstraction Layer 305

The Transport Abstraction Layer (TAL) 305 can comprise an interface that networked SNOs 315 can use to communicate with other machines 310 across the computer network. Computer networks can use different standards and different protocols to communicate different types of data. With conventional technology, applications 410 that have a need to communicate with other machines 310 on the network are often forced to adhere to different standards/ protocols. For example, some networks use TCP/IP protocol over an Ethernet network for reliable transmission and others use HTTP over TCP/IP over Ethernet.

This means that an application 410 is usually required to communicate with different kinds of protocols to transmit their data packets. Opposite to conventional technology, TAL 305 can abstract any differences in protocols so that any machine 310 using a SNO 315 is not required to modify an individual SNO 315 to work on or with a different network. Instead, the TALs 305 can be mapped to their networks. A TAL 305 can abstract the network protocols by using simple interfaces that other developers can modify and provide an implementation specific to their needs. TALs 305 can be mapped directly to the capabilities of network protocols. For example, channels 417 (discussed below) within TALs 305 can correspond to TCP ports.

A developer coding a network application using a SNO 315 is typically required to create a session 415 that establishes basic contact between different machines 310. As part of the establishing a session 415, an application 410 could require authentication such as an exchange of signatures/credentials to establish identity. Once a session 415 is established, SNOs 315 and data within SNOs 315 can be shared. For each SNO 315 to be shared, a context 500 is created where the SNO 315 is registered within the context 500. Further details of contexts 500 will be described below with respect to Figure 6.

Referring now to Figures 6A-6C, each SNO 315 is shared within a context 500 which has one channel 417 in it. A session 415 can be characterized as a large pipe coupled to other machines 310, while channels 417 can be characterized as smaller, sub-pipes which can exchange information about an individual SNO 315 between machines 310. According to one exemplary embodiment, each machine or node 310 in a session 415 is not required to join all the channels 417 of a session 415. A sub-set of nodes 310 can participate in one channel 417 and a different or overlapping sub-set might participate in a different channel 417.

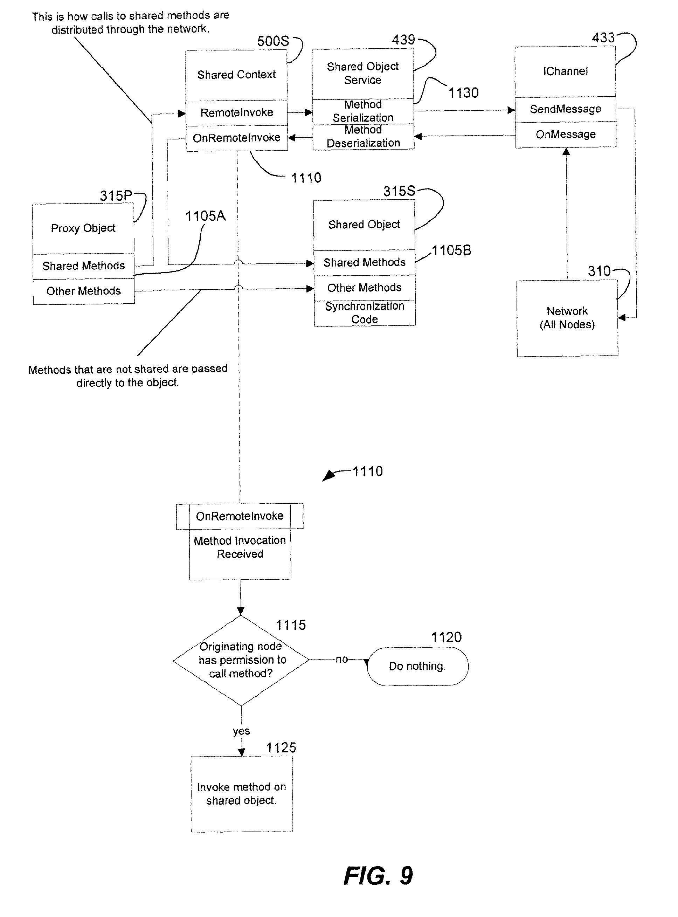

When a SNO 315 is created and shared in a context 500, it can be serialized into a network transportable message format (potentially binary or XML -- see 1130 in Figure 9 discussed below) and it can be sent to other machines 310 in a channel 417 using a method referred to as IChannel. SendMessage which will be described in further detail below. When changes are made to a SNO 315 and saved, the new changes can also be sent using the IChannel. SendMessage method.

For delivery of messages within a channel 417 and a session 415, full ordering of those messages can be used for some instances while partial ordering and no ordering can be used in others. Full ordering, partial ordering and no ordering are standard terms used in computer network applications and are known to those of ordinary skill in the art. But for the sake of clarity and completeness, the following are exemplary brief definitions/examples for these words: Full ordering can refer to a scenario when a Node A sends packet one at time T1 and Node B sends packet two at time T2 (T2 being later than T1). All nodes 310 in the channel 417 see packets one and two arrive in the exact same order as they were sent (i.e. Packet one arrives before packet two).

Partial ordering can refer to a scenario where Node A sends packet one at T1 and packet two at T2 and Node B sends packet three at T3 and packet four at T4. Different nodes can see packets one, two, three, and four in a different order but all packets originating from the same node will arrive in the order they were sent. For example, Node C could receive packets three and four first, and packets one and two next. But they do not receive packet two before packet one or packet four before packet three.

No ordering is a scenario where there is no guarantee of any order. Packets could arrive in any order from any source.

ISession Interface 436

ISession interface 436 can be used by an application 410 to create a network communication session 415. The application 410 can choose to establish identity and authentication credentials with the nodes it is in a session 415 with. The session related information is exchanged using a SendMessage method of ISession interface 436.

The ISession interface 436 can also include a mechanism to receive notifications when another node communicates with the local node 310. Each node 310 can register a handler that manages any notifications received. When a session is created, a SessionOpenedEvent notification is sent to the nodes 310 within a channel 417. When a session is closed, a SessionClosedEvent notification is sent to the nodes 310 within a channel 417. When a message is received, a SessionMessageEvent notification is sent to the other nodes 310 within a channel 417.

An instance of a multipoint session 415 contains methods for session management; like sending/receiving messages, creating new channels and monitoring & maintaining the status of the session.

The following is exemplary pseudo-code for the public interface ISession 436. The term "fired" used below means that a message is sent to all nodes 310 on a particular channel 417. Those skilled in the art will appreciate that modifications to this pseudo-code can be made without departing from the scope and spirit of the present invention:

```
{
    // Fired when a message is received from another node.
    event SessionMessageEvent Message;


    // Fired when the session was unable to send a message.
    event SessionMessageErrorEvent MessageError;


    // Fired when the session is opened.
    event SessionOpenedEvent Opened;


    // Fired when the session is closed.
    event SessionClosedEvent Closed;


    // Gets the node represented by the local user in this session.
    INode MyNode
```

```
// Gets a value indicating if the session is open.
bool IsOpen

// Closes the session.
void Close();

// Checks the connection of a node.
bool CheckConnection(INode who);

// Creates a new unopened channel.
IChannel CreateChannel(string name);

// Sends a message to an individual node in the session.
IMessage SendMessage(object message, INode to, bool ordered, object cookie);

// Stops message events and queues incoming messages.
void BeginDeferMessages();

// Dequeues all messages and resumes message events.
void EndDeferMessages();
}
```

IChannel 433: Methods for Channel Management

Referring briefly to Figure 4B, this figure illustrates various stages over time that can exist during an object creation sequence. After a session 415 is created, an application 410 can create one or more SNOs 315 and can give the IChannel interface 433 to each SNOs' 315 containing context 500. A context 500 can create a channel 417 using a CreateChannel method of ISession 436.

IChannel 433 contains methods for channel management like closing, monitoring the status of the channel, sending/receiving messages and identifying the nodes. Each context 500 can attach handlers to the events exposed by the channel 417 and it is notified when events occur. When another node joins and leaves the channel 417, ChannelJoinedEvent and ChannelLeftEvent are fired respectively. When a node has been accepted to join the channel, ChannelJoinRequestEvent is fired.

The following is exemplary pseudo-code for the public interface IChannel 433. The term "fired" used below means that a message is sent to all nodes 310 on a particular channel 417. Those skilled in the art will appreciate that modifications to this pseudo-code can be made without departing from the scope and spirit of the present invention:

public interface IChannel 433

```
{
// Called when the channel receives a message.
event ChannelMessageEvent Message;


// Called when the channel was unable to send a message.
event ChannelMessageErrorEvent MessageError;


// Called when the channel is opened.
event ChannelOpenedEvent Opened;


// Called when the channel is closed. All nodes 310 are disconnected.
event ChannelClosedEvent Closed;


// Called when the local node joins the channel.
event ChannelJoinedEvent Joined;


// Called when the local node leaves the channel.
event ChannelLeftEvent Left;


// Called when a node has been accepted to join the channel.
event ChannelJoinRequestEvent JoinRequest;


// Called when a node joins the channel.
event ChannelNodeJoinedEvent NodeJoined;


// Called when a node leaves the channel.
event ChannelNodeLeftEvent NodeLeft;
```

```
// Called when the channel nodes do not have same version of SNO objects.
// Data loss may have occurred that might have caused SNOs in a channel to
// become different versions of each other.
event ChannelSynchronizationFailureEvent SynchronizationFailure;


// Called when the channel recovers from a synchronization failure.
event ChannelSynchronizationRecoveryEvent SynchronizationRecovery;


// Gets the unique name for the channel.
string Name


// Gets the node represented by the local user in this channel.
INode MyNode


// Gets the nodes that are in the channel.
INode[] Nodes


// Gets a value indicating if the channel is open.
bool IsOpen


// Opens the channel.
void Open();


// Disconnects all nodes from the channel.
void Close(object info);


// Joins a remote nodes channel.
void Join(INode from, object info);


// Disconnects the channel.
void Leave(object info);
```

```
// Sends a message to all nodes in the channel.

IMessage SendMessage(object message, MessageOrderingType orderingType, object
cookie);


// Sends a message to an individual node in the channel.

IMessage SendMessage(object message, INode to, bool ordered, object cookie);


// Stops message events and queues incoming messages.

void BeginDeferMessages();


// Dequeues all messages and resumes message events.

void EndDeferMessages();

}
```

INode interface

Each machine 310 in a session 415 is identified by an INode interface. This interface comprises a URI (Universal Resource Identifier) and an IIdentity interface. IIdentity is a standard interface defined by Net Framework.

```
// Specifies a standard interface for identification of a networked node.

public interface INode

{

    // A unique uri for the node.

    string Uri


    // The identity of the node's user.

    IIdentity Identity

}
```

Message Ordering Types:

The following enumeration specifies message ordering types.

public enum MessageOrderingType

```
{
    // No ordering.
    None,


    // Messages sent from a single node are received in the order they were sent.
    Partial,


    // Messages sent from all nodes are received in the same order.
    Full,
}
```

IMessage:

Asingle multipoint (network) message; contains properties for identification:

```
            // Specifies a standard interface for messaging.
            public interface IMessage
            {
                // Gets who sent the message.
                INode From


                // Gets the contents of the message.
                object Message


                // Gets the message's ordering type.
                MessageOrderingType Ordering


                // Gets the message's optional cookie.
                object Cookie
            }
```

Summary of TAL 305 and its relationship with SNOs 315

To use SNOs 315, separate implementations of TAL interfaces are usually needed because SNOs 315 use TAL 305 to talk to other machines 310 on a network.
To provide an implementation of TAL 305, a version of the implementation of a network protocol is needed. If there is not one available, then one should consider the following: identify the standard network protocol that will be used to communicate with other machines 310. For example, if communications will be made with a web server, HTTP may be a preferred protocol. TAL interfaces 305 can then be mapped to HTTP interfaces. For example, when a TAL 305 for a session 415 is created, a corresponding HTTP session can be created. When the submethod ISession.SendMessage is called, that message can be sent using HTTP protocol's put or get methods.

TAL 305 provides a level of abstraction to SNOs 315, so changes are not needed when a SNO 315 is desired to be used with a different network protocol. Besides, it may be possible to share another person's implementation of TAL or share implementations if the network protocol matches.

Exemplary Context 500 For System Network Objects 315

Referring now to Figure 5, this figure illustrates exemplary components that can be found in a context 500. Each object 315 of the system can have one associated context 500. And each object 315 can be part of one context 500. Each context 500 can comprise information that tracks one or more relationships between multiple system network objects (SNOs) 315 and relationships between computers 310 that may have copies of the objects 315 or access to the objects 315 or both. Each context 500 can comprise its own unique identifier 505 that can include a number or series of letters or a combination thereof

Each context 500 can also comprise one or more of the following: a sublist 510 of security parameters and permissions for each computer 310 that has objects 315 in the context 500; event information 515 that can include a computer 310 joining or leaving a context 500, object designations such as shared or unshared, state changes for objects 315 in the context 500 and state changes for the context 500 itself; a sublist 520 of network objects 315 that are part of a particular context 500; a sublist 525 of computer identifiers for each computer 310 that is part of the context 500

The security sublist 510 can include a set of principals that may include a list of permissions that identify which computers 310 have access to the objects 315 in the context 500 and what levels of access a computer 310 may have. For example, one computer 310 may only have read only rights with respect to a particular object 315 while another computer 310 may have both read and writing rights with respect to a particular object 315.

A context 500 can identify which computers 310 have one or more particular objects 315 and it can help manage the objects 315 that are part of a particular context 500. Each computer 310 has a partial or full copy of the context 500 that the computer 310 is a part of. A context 500 can help make sure that each computer 310 that is part of a context 500 has the same version of the one or more objects 315 that may make up the context 500. With the security parameters sublist 510, the context 500 can help determine which computers 310 can access certain objects 315 in a context 500 and which computers 310 can change objects 315 in a context 500.

The context 500 can have active and dormant states. In an active state, each computer 310 that is part of a particular context 500 can be provided with information on objects 315. For example, if any changes are made to objects 315 that are part of the context 500, then this information can be provided to those computers 310 that have copies of the objects 315 of interest. During an active state of a context 500, each computer 310 can communicate (receive or transmit) any information concerning the objects 315 that are part of the context 500.

Exemplary Session 415 comprising different contexts 500

Referring now to Figure 6A, this figure illustrates a session 415 that exists between computers 1 though 4. The session 415 contains a unique identifier which is used for machines 310 who wish to join the session. A machine 310 can be in multiple sessions at the same time. A session 415 can comprise multiple contexts 500. A session 415 represents a collection of machines 310 that are communicating with each other. That communication can happen through various contexts 500 in the session.

Referring now to Figure 6B, this figure illustrates details of a first context 500A that is part of the larger session 415 of Figure 6A. All computers 310 in context 500A that have permissions to use the first and second objects 315, have a copy or at least access to the first and second objects 315 irrespective of their location. For the exemplary embodiment illustrated in Figures 6A and 6B, only the first, third, and fourth computers 310 have the first and second objects 315. Machine 2 is not part of the context 500A, and therefore machine 2 cannot access or get a copy of object two (but machine 2 is part of the larger session 415 as illustrated in Figure 6A).

Referring now to Figure 6C, this figure illustrates details of a second context 500B that is part of the larger session 415 of Figure 6A. All computers 310 in context 500B that have permissions to use the first and third objects 315, have a copy or at least access to the first and third objects 315 irrespective of their location. For the exemplary embodiment illustrated in Figures 6A and 6C, only the first, second, and fourth computers 310 have the first and third objects 315. Machine 3 is not part of the context 500A, and therefore machine 3 cannot access or get a copy of object three (but machine 3 is part of the larger session 415 as illustrated in Figure 6A).

Exemplary Architecture of a System Network Object 315

Referring now to Figure 7, this figure illustrates an exemplary architecture of a system network object 315 according to one exemplary embodiment of the present invention. A system network object 315 may comprise of shared methods which are invoked on every node in the context, local methods which are invoked only the local machine, and other special synchronization code which is specific to the shared network object 315..

Creating a context 500 with system network objects 315

First, a machine 310 usually must join a session 415. This can be accomplished using a TAL 305. A set of principals can be created and added to the context 500. These describe the security / access lists maintained by the context list manager 705 for the shared context and are enforced locally. For an enterprise system, the set of principals could be obtained from a trusted location such as Microsoft's Active Directory or a trusted machine 310 in a session 415. The channel 417 that will be associated with a context can be created using the session 415.

Sharing a context 500 across multiple machines 310

To share a context 500 across multiple machines 310, a method referred to as "Share" can be invoked from Shared Object Services 439, which can pass the channel 417 and the context 500. After this passing of information occurs, the context 500 is considered to be "shared."

Joining a context 500

To join a context 500, a method referred to as "Join" can be invoked from Shared Object Services 439, passing the channel 417, the context 500, and the node 310 in which a connection is desired. Usually, the node 310 must already exist in the channel 417. And a request to join is usually sent to the specified node 310. Once a node 310 receives this "OnJoinRequest" message that can comprise the joining node's credentials / identity and additional properties to be specified by the creator of the context 500, the receiving node 310 can either choose to accept or reject the request.

And in either case, the receiving node 310 usually sends a total-ordered message to the joining node 310 which can contain additional information specific to the implementation of that shared context 500. This message is usually total-ordered so that any data sent in that message will be synchronized with other messages being sent in the channel 417. This is so that a joined node 310 can start with its context 500 in a synchronized state.

An exemplary context 500 can use this data to send existing shared objects 315 in the context 500 to the joining node 310 thus keeping the context synchronized. The joining node 310 can receive this data as an OnJoinResponse message. If the message contains an acceptance into the context 500, the joining node 310 is now considered as "in" the context 500.

A context 500 can receive messages indicating the state of each node 310 in the context 500. The node states can include, but are not limited to, the following: connecting, connected, disconnecting, disconnected, and dropped. The order of events for a node 310 joining a context 500 is almost always as follows: disconnected -> connecting -> connected.

For disconnecting a node 310 from a context 500, the order of events is usually as follows: connected -> disconnecting -> disconnected. At any stage, a node 310 can go to the dropped state, indicating that the node 310 has dropped unexpectedly from the context.

Exemplary Method for Sharing objects between computers - Joining a Context 500

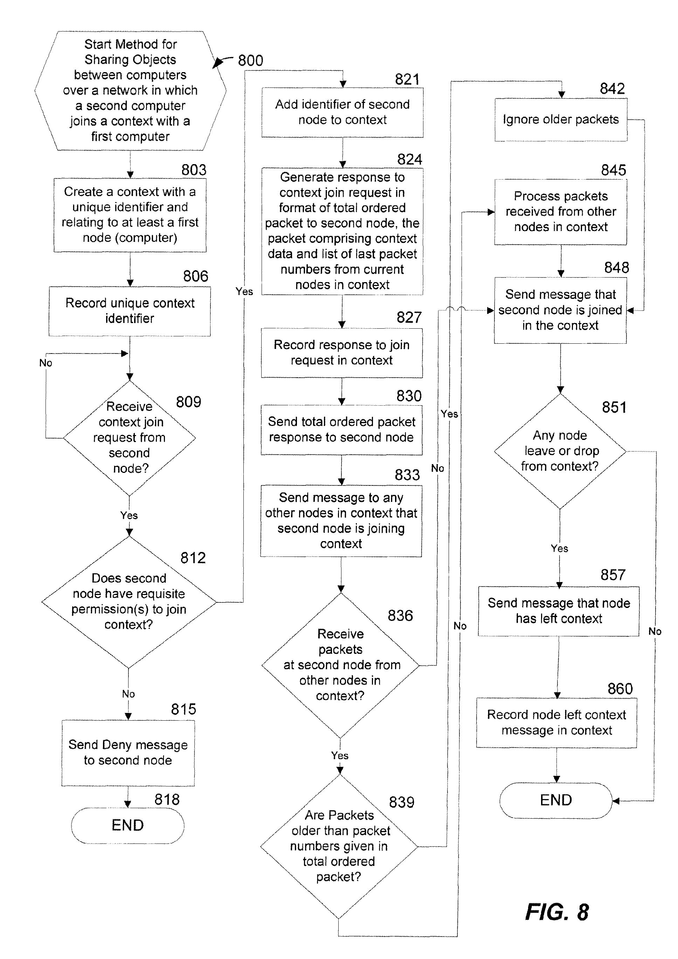

Referring now to Figure 8, this Figure is a logic flow diagram illustrating an overview of an exemplary process 800 for sharing objects 315 between computers 310 over a network where a second computer 310 joins a session 415 with a first computer 310 according to one exemplary embodiment of the present invention. Step 803 is the first step of the exemplary process 800 in which a context 500 with unique identifier relating to at least a first computer 310 is created. In this step, a first computer or node 310 can create the context 500 having a unique alpha or numeric or alphanumeric identifier as discussed above with respect to Figure 5. The unique context identifier can be recorded in the context 500 in step 806.

In decision step 809, it is determined whether a second node 310 has sent a request to join the context 500 created by the first node 310. If the inquiry to decision step 809 is negative, then the process follows the "No" branch and loops back to step 809. If the inquiry to decision step 809 is positive, then the "yes" branch is followed to decision step 812.

In decision step 812, it is determined if the second node 310 has the required permission(s) to join the session with the first node 310. In this step, the first node 310 can check its context list 500 and more particularly, the security sublist 510 of the context 500 to determine if the first node 310 has permission(s) to access the objects 315 of the context 500.

If the inquiry to decision step 812 is negative, then the "No" branch is followed to step 815 in which a deny message is communicated to the second node 310. Next, in step 818, the process 800 then ends.

If the inquiry to decision step 812 is positive, then the "Yes" branch is followed to step 821 in which the unique identifier of the second node is added to the context 500. Next, in step 824, a response to the join request message is generated and is formatted as a total ordered packet that includes current session data and a list of the last packet numbers from current nodes 310 in the session 415.

The list of last packet numbers will be used in step 839 which will be discussed in further detail below. In step 827, the response destined for the second node 310 that includes the last packet numbers is recorded in the context 500. In step 836, the total ordered packet response is then delivered to the second node 310.

In step 833, a message can be sent to any other nodes in the context 500 that the second node 310 is joining the context 500. In decision step 836, it is determined if any packets are received at the second node 310 during the context 500. If the inquiry to decision step 836 is negative, then the "No" branch is followed to step 848.

If the inquiry to decision step 836 is positive, then the "Yes" branch is followed to decision step 839 in which it is determined whether the received packets are older than the packet numbers given in the total ordered packet from the first node 310. In other words, in decision step 839, it is determined if the second node 310 is receiving packets or information that occurred prior to the second node 310 joining the context 500. The second node 310 should not use information concerning objects 315 of the context 500 that is dated and which occurred prior to the time in which the second node 310 joined the session 415 and context 500.

If the inquiry to decision step 839 is positive meaning that the received packets contain information that is dated, then the "Yes" branch is followed to step 842 in which the packets are ignored by the second node 310. If the inquiry to decision step 839 is negative meaning that the packets contain new information relative to the time in which the second node 310 joined the context 500, then the "No" branch is followed to step 845 in which the second node 310 processes the received packets.

Next, in step 848, the second node 310 can send a message to all of the other nodes 310 in the context 500 that it is joined in the context 500. Next in decision step 851, it is determined if any node 310 has left or dropped a session 415. If the inquiry to decision step 851 is negative, then the "No" branch is followed to where the process 800 ends.

If the inquiry to decision step 851 is positive, then the "Yes" branch is followed to routine 857 and a message is sent to all the nodes 310 that a node 310 has left the context 500. In step 860, the unique identifier for the node 310 that left is recorded in the context 500. The process 800 then ends.

Shared Object 315S Description

Referring now to Figure 9, an exemplary functional block diagram illustrating a shared object 315S and how this object 315S can be accessed by different nodes 310 in a computer network is provided. The shared object 315S can comprise an object 315 which can be proxy-able (i.e. in the case of the net framework, a MarshalByRef object) and usually must declare itself as sharable. An exemplary method for declaring objects 315 as sharable can use an attribute or implement an interface. The shared object 315S can comprise a set of shared methods 1105. Shared methods 1105 can comprise methods that when called are invoked on all nodes 310 connected to that shared object 315S in a context 500.

Shared methods 1105 are declared with attributes that describe how a shared method should be called or addressed. The attributes can be classified into at least three categories: message ordering flags, message invocation flags, and message assurance. For more attribute classifications, see the section of the detailed description below entitled, "Shared Method Attributes."

Shared Method Attributes

"Message ordering" flags can describe a way in which invocation messages are sent across a shared context 500S to the other nodes 310. Three types of message ordering can include, but are not limited to: no ordering, partial ordering, and full ordering. These message ordering types are described above with respect to the description of TAL 305. An exemplary embodiment of the present invention can comprise full ordering as a default option, as full ordering allows for no loss of synchronization.

Shared method invocation flags can define when a shared method 1105 should be invoked. A shared object 315S can receive shared object invocation messages at multiple times, each time corresponding to a change in the stage of the message ordering. The message ordering, as described in the TAL 305 description above, usually proceeds as follows: no ordering -> partial ordering -> full ordering -> guaranteed. At any point in a stage, a message can fail, changing the state to "failed"

The shared method 1105 can declare which states it would like to be invoked on. A shared context 500S usually does not guarantee that it will call the shared method 1105 on any stage other than the final stage which be either the failed stage or the stage specified by the method order flag. During invocation, a shared method 1105 can determine the node 310 that is invoking the method, the current invocation stage, and what share context 500S a node 310 belongs to.

An exemplary embodiment can include default values set to "full ordered" and "guaranteed". Such a default setting can make the shared object 315 S as if it existed on a local machine 310 and would be unable to (become out of sync) lose its mirrored state with the other nodes 310. Setting the value to "guaranteed" ensures the shared method 1105 will not be called unless it is able to be called on each node 310 in the context 500. "Message assurance" is a setting that indicates a concern if a message is delivered to all machines 310 or not.

Registering and un-registering shared objects 315S in a context 500

A shared context 500S can register shared objects 315S. When a shared object 315S is registered, a unique identifier is typically required. This identifier can be used to uniquely distinguish the shared object 315 in the shared context 500S. In this scenario, a proxy object 315P is returned and the shared object 315 is now connected in the context 500. The proxy object 315P usually must be used by the clients/nodes 310 of the shared object 315P. Method calls on the proxy object 315P can be packaged into a method invocation message and sent into the shared context 500S. When the method invocation message 1110 is received in the shared context 500S, the unique identifier in the message is used to find the shared object 315 that the method should be invoked on. But the shared context 500S usually does not immediately invoke the shared method 1105.

Instead, the shared context 500S usually first checks in decision step 1115 its set of principals in the sublist 510 of security parameters and permissions to determine if the sending node 310 has permission to invoke the share method 1105. If the inquiry to decision step 1115 is negative, then the "no" branch is followed to step 1120 in which the message is dropped and an event is raised locally on the share context 500S. Otherwise, if the inquiry to decision step 1115 is positive, the "yes" branch is followed to step 1125 in which the shared context 500S invokes the method on the shared object 315S. An exemplary system could use Net principals as the means for security principals.

It should be understood that the foregoing relates only to illustrative embodiments of the present invention, and that numerous changes may be made therein without departing from the spirit and scope of the invention as defined by the following claims

**Claims**

1. A method for sharing programming objects between computers comprising:

    creating a context having a unique identifier;
    receiving a request from a second computer to join a context with a first computer;
    determining if the second computer has permission to join the context; and
    sending a message comprising context data to the second computer if the first computer has permission.

2. The method of Claim 1, wherein receiving a request from a second computer to join a context further comprises receiving a request from a second computer that comprises a server.

3. The method of Claim 1, wherein receiving a request from a second computer to join a context further comprises receiving a request from a second computer that comprises a client of a server and wherein the server is associated only with the second computer and not the first computer.

4. The method of Claim 1, wherein receiving a request from a second computer to join a context further comprises receiving a request from a second computer that is part of a computer network that includes the first computer.

5. The method of Claim 1, wherein sending a message comprising context data to the second computer further comprises sending information relating to one of a chat room, a word processing program, a spreadsheet program, a slide presentation program, and a gaming program.

6. The method of Claim 1, wherein sending a message comprising context data to the second computer further comprises sending information relating to a real-time collaboration.

7. The method of Claim 1, wherein receiving a request from a second computer to join a context further comprises receiving a request from a second computer comprising a hand held computer and wherein the first computer comprises one of a desk top and lap top.

8. The method of Claim 1, further comprising generating the message with a full ordered packet.

9. The method of Claim 1, further comprising generating the message with a full ordered packet that comprises the context data and a list of last packet numbers from one or more nodes that are part of the context.

10. The method of Claim 1, further comprising:

   receiving packets with the second computer; and
   determining when the packets received with the second computer were created relative to the context data.

11. A system for supporting real time collaboration computer applications comprising:

   an application program for receiving input and for providing output that is shared between computers;
   a system network object for supporting function calls made by the application program and that is accessible by other computers across a network; and
   a transport abstraction layer for establishing and maintaining communications between system network objects distributed across the network, irrespective of whether the system network objects reside on server computers and non-server computers.

12. The system of Claim 11, wherein the transport abstraction layer comprises a set of interfaces.

13. The system of Claim 11, wherein the system network object is part of a context.

14. The system of Claim 13, wherein the context comprises information that tracks one or relationships between multiple system network objects and relationships between computers that may have one of copies of the objects and access to the objects.

15. The system of Claim 11, wherein the application program comprises one of chat room application, a word processing program, a spreadsheet program, a slide presentation program, and a gaming program.

16. The system of Claim 11, wherein the application program comprises a real time collaboration program.

17. The system of Claim 11, wherein the computers across the network comprise at least one computer server and at least one peer-to-peer network.

18. The system of Claim 11, wherein the computers across the network are part of a peer-to-peer network.

**Conventional Art**
**FIG. 1**

**Fig. 2**

EP 1 583 320 A2

FIG. 3

310C                    310B

Machine 1              Machine 2

410A          415        410B
417
┌──────────┐         ┌──────────┐
│Application│         │Application│
│ Program  │         │ Program  │
└──────────┘         └──────────┘
     ↕ 315B              ↕ 315B
┌──────────┐         ┌──────────┐
│ System   │         │ System   │
│ Network  │  Session │ Network  │
│ Object   │         │ Object   │
│ (SNO)    │         │ (SNO)    │
└──────────┘         └──────────┘
     ↕ 305A              ↕ 305B
┌──────────┐         ┌──────────┐
│Transport │         │Transport │
│Abstraction│ ←→     │Abstraction│
│Layer (TAL)│        │Layer (TAL)│
└──────────┘         └──────────┘

**FIG. 4A**

500

┌─────────────────────────────────────────────────────┐
│                      Context                          │
│  ──────────────────────────────────────              │
│                                      505              │
│   • Has Unique Identifier                             │
│   • Information that tracks one or relationships between│
│     System Network Objects and relationships between  │
│     computers with Objects                            │
│ 510                                            520    │
│  ┌────────────────────┐                               │
│  │SubList of Security │    ┌────────────────────┐     │
│  │parameters and      │    │SubList of Network  │     │
│  │permissions for each│    │Objects that are part of│  │
│  │machine of the context│  │context             │     │
│  └────────────────────┘    └────────────────────┘     │
│                                                        │
│  ┌────────────────────┐                               │
│  │Event Information:  │    ┌────────────────────┐     │
│  │Machine joining/leaving│ │SubList of Machine  │     │
│  │context; objects shared/│ │identifiers for each│  525│
│  │unshared; state changes│ │machine that is part of│  │
│ 515│for objects in context and│ │context         │     │
│  │context itself      │    └────────────────────┘     │
│  └────────────────────┘                               │
└─────────────────────────────────────────────────────┘

**FIG. 5**

Fig. 4B

**FIG. 6A**

**FIG. 6B**

**FIG. 6C**

**FIG. 7**

Start Method for
Sharing Objects
between computers
over a network in which
a second computer
joins a context with a
first computer

800

803
Create a context with a
unique identifier and
relating to at least a first
node (computer)

806
Record unique context
identifier

No

809
Receive
context join
request from
second
node?

Yes

812
Does second
node have requisite
permission(s) to join
context?

No

815
Send Deny message
to second node

818
END

Yes

821
Add identifier of second
node to context

824
Generate response to
context join request in
format of total ordered
packet to second node, the
packet comprising context
data and list of last packet
numbers from current
nodes in context

827
Record response to join
request in context

830
Send total ordered packet
response to second node

833
Send message to any
other nodes in context that
second node is joining
context

836
Receive
packets
at second node from
other nodes in
context?

Yes

839
Are Packets
older than packet
numbers given in
total ordered
packet?

Yes

No

842
Ignore older packets

845
Process packets
received from other
nodes in context

848
Send message that
second node is joined
in the context

851
Any node
leave or drop
from context?

Yes

857
Send message that node
has left context

No

860
Record node left context
message in context

END

No

*FIG. 8*

This is how calls to shared methods are
distributed through the network.

500S

**Shared Context**

RemoteInvoke

OnRemoteInvoke

439

**Shared Object Service**

Method Serialization

Method Deserialization

1130

433

**IChannel**

SendMessage

OnMessage

1110

315P

**Proxy Object**

Shared Methods

Other Methods

1105A

315S

**Shared Object**

Shared Methods

Other Methods

Synchronization Code

1105B

310

**Network (All Nodes)**

Methods that are not shared are passed
directly to the object.

1110

OnRemoteInvoke

Method Invocation Received

1115

Originating node
has permission to
call method?

no

1120

Do nothing.

yes

1125

Invoke method on
shared object.

**FIG. 9**